# EUROPEAN PATENT SPECIFICATION

(11) **EP 1 295 265 B1**
(45) Date of publication and mention of the grant of the patent: **12.10.2005**
(21) Application number: 00939014.7
(22) Date of filing: 22.06.2000
(51) Int. Cl.: G07F 19/00, G06F 17/60

(54) **A TRANSACTION DISPUTE MANAGEMENT SYSTEM AND METHOD**
SYSTEM UND VERFAHREN ZUR VERWALTUNG VON TRANSAKTIONSANFECHTUNGEN
SYSTEME ET PROCEDE DE GESTION D'UN LITIGE AUTOUR D'UNE TRANSACTION

(43) Date of publication of application: 26.03.2003
(73) Proprietor: TRINTECH LIMITED, Dublin 18 (IE)
(72) Inventor: CAULFIELD, Brian, Dublin 9 (IE); O'CONNOR, William, Dublin 2 (IE)
(74) Representative: Weldon, Michael James
(86) International application number: PCT/IE2000/000080
(87) International publication number: WO 2002/001523

(56) References cited:
- EP-A- 0 969 430
- WO-A-00/08582
- US-A- 4 318 184
- US-A- 5 018 196
- US-A- 5 262 941
- US-A- 5 895 450
- US-A- 6 055 519
- SCOTT TILLETT: "New channel to resolve disputes" INTERNET WEEK (E-BUSINESS APPLICATIONS), [Online] 14 August 2000 (2000-08-14), XP002162442 Retrieved from the Internet: <URL:www.internetwk.com/ebizapps/ebiz08140 0-2.htm> [retrieved on 2001-02-26]
- "Online Dispute Resolution at Squaretrade" SQUARETRADE, [Online] XP002162443 Retrieved from the Internet: <URL:www.squaretrade.com/learnmore/odr_090 600.jsp> [retrieved on 2001-03-07]
- SUNG-WOO TAK ET AL: "Modeling and Design of Notarial system supporting Secure Transactions in Electronic Commerce based on the Internet" PROCEEDINGS. INTERNATIONAL CONFERENCE ON INFORMATION NETWORKING, 21 January 1998 (1998-01-21), XP002118185

## Description

### INTRODUCTION

### Field of the Invention

The invention relates to control and resolution of dispute cases arising from transactions in any environment such as the credit card industry.

### Prior Art Discussion

In the example of credit card transactions, processing of such transactions is more complex than appears to many consumers. A single transaction such as purchase of an item in a retail outlet involves interaction between cardholder, merchant, acquirer, credit card company, and issuer systems. A certain proportion of transactions (typically 0.2% of retail transactions and significantly more Internet transactions) give rise to disputes, which in turn may give rise to "chargebacks" in which the consumer is refunded.

The handling of such disputes is quite complex because of both the complexity of transaction logic and of the relationships between the parties involved. Heretofore, this has required a large overhead because of time-consuming input by skilled administrative personnel, and the invention is directed towards addressing this problem.

US 5 895 450 describes a system for handling complaints, it has software routines for receiving a complaint, for directing a response from a subject to the complainant, for storing a complaint, and for negotiating a settlement.

### SUMMARY OF THE INVENTION

According to the invention there is provided a transaction dispute management system: and method as set out in claim 1 and 13.

In one embodiment, a parameter value includes a database table address for a table fetch to retrieve an answer.

In a further embodiment, a parameter value includes an address for a database table of user questions to prompt input of an answer.

In one embodiment, the rules for determining an answer are goal-driven inferencing rules.

In one embodiment, the recommended action rule processing means comprises means for testing compliance with possible recommended actions of a list selected from a plurality of lists.

Preferably, the recommended action rule processing means comprises means for ceasing testing when a possible recommended action tests positive.

In one embodiment, the tests involve matching conditions associated with the recommended action.

In a further embodiment, the recommended action processing means comprises means for determining a positive test result if a probability value exceeds a threshold.

In one embodiment, the recommended action rule processing means comprises means for selecting a final recommended action in the list if processing reaches that recommended action.

In a further embodiment, the system comprises a rule processing means for processing a recommended action without use of a decision tree.

In another embodiment, said rule processing means comprises means for performing actions leading to closure of a dispute.

In another embodiment, the system further comprises means for dynamically updating decision trees to reflect changes in prescribed dispute-handling requirements.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a schematic representation of interaction of a system of the invention with users and other systems;
Figs. 2 and 3 are flow diagrams illustrating operation of the system; and
Fig. 4 is an example of a simple decision tree.

### Detailed Description of the Invention

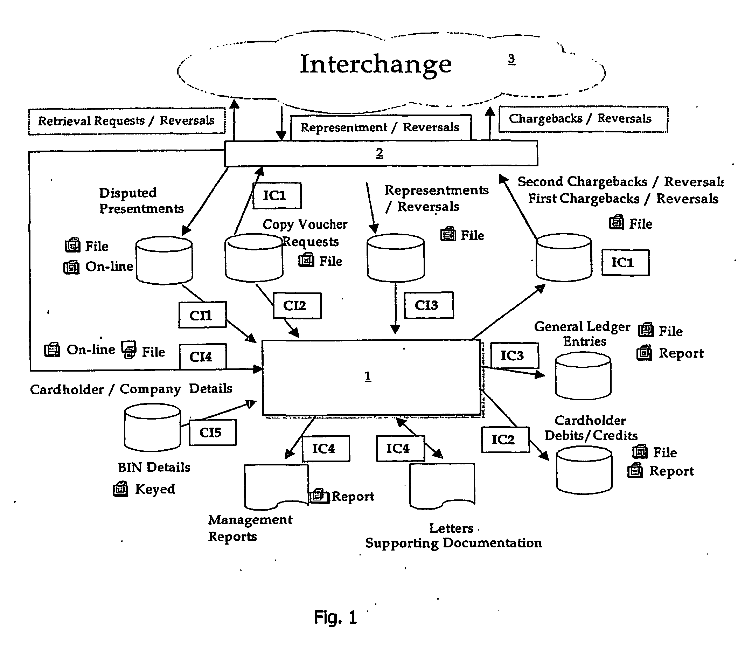

Referring to Fig. 1 a system 1 of the invention interfaces with a card management system 2, with an interchange system 3, and with users in the manner illustrated. The system 1 is operated by a card issuer company.

The system 1 processes the following input data from the card management system:
CI1: Disputed Presentments
CI2: Copy Voucher Requests
CI3: Representments / Reversals
CI4: Cardholder Data
CI5: Acquirer Data

The following table sets out the data in more detail.

| System Interface | Interface | Description |
|---|---|---|
| CI1 | File | The file contains all presentments marked as disputed in the card management system. |
| | | Usually the front-line support or customer service department marks these presentments as disputed based on correspondence by phone, fax or e-mail from the cardholder or company representative. CI1 is created by the previous night's host batch run, which routes all 'disputed' presentments to the CI1 file for processing. |
| | On-Line | There are two options with the on-line presentment interface. A Statement Browser is an application, which provides the ability for users to view all transactions appearing on a cardholder's statements and to mark one or more of these transactions as disputed. Once marked as disputed, these transactions are transferred to the system 1 automatically. The Statement Browser retrieves the presentment data using either a database stored procedure or a DLL. A Retrieve Case function allows system users to key a cardholder's account number and acquirer reference number to setup a disputed presentment real-time in the system. A stored procedure or DLL call is used to retrieve the transaction data from the card management system or transaction database based on the cardholder's account number and acquirer reference number. |
| CI2 | File | This file contains copy voucher requests generated in the card management system 2 by |
| | | any combination of customer service, fraud and chargeback personnel. CI2 is created by the previous night's host batch run which routes all copy voucher requests to the CI2 file for processing. This interface applies when a site does not wish to avail of the copy voucher request generation facility within the system 1. |
| CI3 | File | The file contains representments and representment reversals destined for the Issuer. The CI3 file is created through the card management system's routing of incoming representments and representment reversals from interchange. This routing is conducted by the previous night's host batch run. |
| CI4 | File | This file is created when the CI1 file is generated. All cardholder / company data pertaining to cardholders' accounts whose transactions have been disputed (and are contained in the CI1 file) can be extracted by the previous night's host batch run into a file of cardholder / company data. Should the cardholder / company address information change after it has been read into the system, then the latest cardholder data should appear in the CI4 file once the address has changed. The system 1 will then update the cardholder /company address information in the system database for that record. The format of this input file can be site specific. |
| | | This data is used by the system 1 when corresponding with the cardholder / company throughout the chargeback lifecycle. |
| | On-Line | The system 1 enables the generation and maintenance of cardholder information through an on-line interface. This interface can be achieved using a database stored procedure or a DLL. The DLL version of the interface relies on the Issuer to provide the DLL, which will accept a cardholder's account number, as input and return the cardholder's correspondence address as output. |
| CI5 | Keyed | This data is currently keyed on-line. Once acquirer address details have been entered for a given transaction, the data is present in the system 1 for all subsequent transactions pertaining to the same acquirer. |

The system 1 generates the following output data as shown in Fig. 1.
IC1: Retrieval Requests / Reversals / Chargebacks / Reversals
IC2: Cardholder Adjustments
IC3: General Ledger Adjustments
IC4: Letters / Documentation

| ICS Interface | Interface Option | Description |
|---|---|---|
| IC1 | File | The file is generated by the system 1 during an End of Day batch run. The file contains all the retrieval requests and retrieval request reversals generated on that business day. |
| | | The file also contains chargebacks (both 1^{st} and 2^{nd}) and chargeback reversals (both 1^{st} and 2^{nd}) generated on that business day. In addition, automatic chargebacks are also compiled and routed to the IC1 file. |
| IC2 | File | The file is generated during the End of Day batch run. This file contains all cardholder credit and debit adjustments created manually by the users or automatically by the system 1 during that business day. |
| | Report | This report can be generated using a Supervisor application of the system 1. The report lists all cardholder credit and debit adjustments created manually by the users or automatically by the system 1 during that business day. |
| IC3 | File | The file is generated during the End of Day batch run. This file contains all credit and debit general ledger adjustments created manually by the users or automatically by ICS during that business day. |
| | Report | This report can be generated using the Supervisor application. The report lists all credit and debit general ledger adjustments created manually by the users or automatically during that business day. |
| IC4 | Letter / Report | Letters are printed as they are generated or can be printed in batch via the Print Queue. |

The above inputs and outputs arise from processing of transaction disputes. A cardholder or a company card representative can initiate a dispute after issuance of a card statement. The customer service department is responsible for marking the relevant transaction as disputed in the card management system.

Also, disputes may be raised by other departments such as fraud, debt recovery, collections, and closed accounts. The issuer often decides to credit the cardholder until further investigation has taken place.

The issuer has a number of choices with regard to processing the dispute. The issuer may decide to:
a) generate a retrieval request (if the sales voucher will help to confirm whether the dispute is valid)
b) generate a chargeback (if the dispute appears to be genuine and a sales voucher is not required as part of the supporting documentation)
c) close the case (if the dispute is invalid)
d) generate a collections letter (if the Issuer is aware that there is no chargeback right but wants to attempt to retrieve the funds on behalf of the cardholder)
e) write off the transaction (if the dispute is valid but the Issuer is entirely at fault and therefore has no possibility of recovering money through chargeback or collections)
f) debit the cardholder (if the cardholder was initially credited when the dispute was raised and if they subsequently recognise the transaction)

### Chargeback Clearing / Settlement

If the Issuer generates a chargeback or retrieval request, then these records are collated into a file by a batch process, which is usually run at the end of the business day. This file is then sent to interchange. Interchange will validate the records on the file and will 'settle' with the Issuer for all the valid financial records in the file.

Retrieval requests / reversals are non-financial records and chargebacks / reversals are financial records. Interchange will also route the chargebacks and retrieval requests to the relevant acquirer for processing.

### Retrieval Request Fulfillment / Non-Fulfillment

Once the acquirer receives the retrieval request, the following actions may be taken:
a) retrieve a copy of the voucher (internally in the voucher library or from the merchant) and fulfil it to the issuer within the required timeframe.
b) issue a non-fulfillment record to the Issuer indicating the reason why the voucher cannot be supplied.

Once the Issuer receives the fulfillment or non-fulfillment, the options to generate a chargeback, close the case or generate a collections letter are available as actions.

### Representment / Second Presentment

Once the acquirer receives the chargeback and determines that the chargeback reason can be refuted, the acquirer can issue a representment / second presentment. Other actions available to the acquirer are:
a) accept the chargeback (if the chargeback is valid and the acquirer has no further dispute rights)
b) represent the chargeback (if the acquirer can remedy the chargeback by providing additional information which disputes the chargeback reason)
c) debit the merchant (if the chargeback is valid and the dispute was initiated due to merchant error)

### Representment Clearing / Settlement

If the Acquirer generates a representment, then these records are sent to Interchange. Interchange will validate the records on the file and will 'settle' with the Acquirer for all the valid representments in the file. Interchange will also route the representments to the relevant Issuer for processing.

### Assess Representment / Second Chargeback / Pre-Arbitration

Once the issuer receives the representment and analyses the reason the Acquirer represented the transaction, the following actions may be taken:
a) generate a second chargeback (if the representment is invalid). The Issuer may issue a second chargeback using a different chargeback reason than was used with the first chargeback.
b) issue a pre-arbitration letter (if the representment is invalid and the Issuer has no further chargeback rights)
c) accept the representment (if the representment is valid but the cardholder continues to dispute the transaction)
d) debit the cardholder (if the representment is valid and remedies the cardholder's dispute)

### Pre-Arbitration / Arbitration

Both the Issuer and Acquirer have arbitration rights once the chargeback stages in the chargeback lifecycle has expired and they still wish to dispute the transaction. The Issuer can issue a pre-arbitration letter where no second chargeback right exists (e.g. ATM transaction) or where a second representment was received. The pre-arbitration process adheres to strict deadlines and is aimed at resolving the dispute before it reaches the attention of the card schemes. However, if the Issuer and Acquirer cannot resolve the dispute through the pre-arbitration process, the arbitration court of the appropriate card scheme will make a ruling on the dispute and inform both parties (i.e. the Issuer and the Acquirer) of the ruling.

### Collections

At any stage in the chargeback lifecycle, should the Issuer have no chargeback rights available e.g. if the transaction is out of time for chargeback for example, the Issuer can attempt to recover some or all of the funds through the Good Faith Collections process. This involves the Issuer sending a collections letter to the acquirer outlining the reason for dispute and requesting some or all of the funds to be reimbursed by the acquirer. The acquirer may decide to accept the collections request and reimburse the Issuer or reject the collections request.

As is clear from the above, the system 1 performs actions such as processing a chargeback through its lifecycle, performing a retrieval, generating a collections letter, or debiting a cardholder. The decision on what action to take is a complex one, depending on complex business logic and the particular circumstances of the transactions.

### Operation of the System

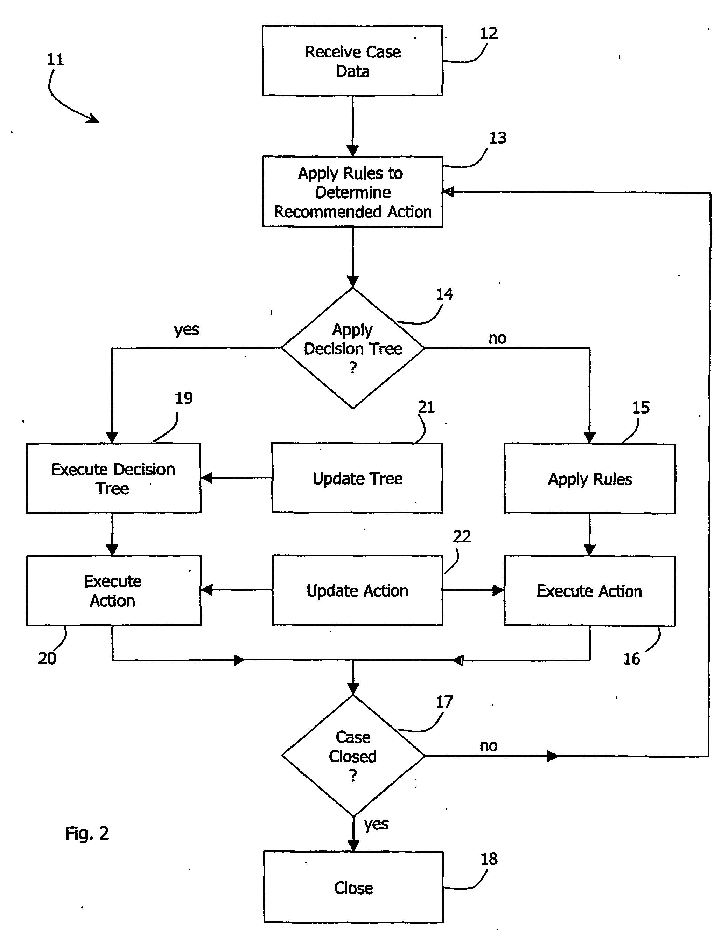

Referring to Fig. 2 a method 11 performed by the system 1 is illustrated. In step 12 case data is received, for example, from the card management system 2 in a batch or on-line transfer or from a user keying in the data. In step 13 rules are applied to determine a recommended action. These rules use an indication of the lifecycle stage in the received data, and perform tests for possible recommended actions (RAs) in turn. The RA order is probability governed by the lifecycle stage indicated in the received data. Each test involves attempting to match conditions using IF/THEN/ELSE coding. An example of a simple condition is an upper threshold amount for a transaction. Each list has a last or final default RA which is chosen if the testing reaches that RA by not achieving a match for a previous RA in the list. Matching of an RA need not necessarily involve complete satisfaction of the test conditions, as the acceptance of an RA may involve achieving conformity above a probability threshold such as 80%. An example is where two RAs comprising 14 of 16 conditions are satisfied but one RA is chosen over the other based on the weighting factor of the satisfied conditions.

The selected RA provides an indication in the relevant RA database record of whether to use a decision tree for further processing of the dispute. Decision trees for further processing are governed by compliance with prescribed official requirements. An example is the set of dispute-handling chargeback rules developed by the major credit card companies.

If decision tree processing is not required, general accounting and business rules are applied in step 15. This may simply involve generating messages for interested parties to execute an action in step 16 to close the dispute case. The latter decision is indicated by the decision step 17. Where the case is not to be closed, the process loops back to step 13. Closure of the case is performed in step 18.

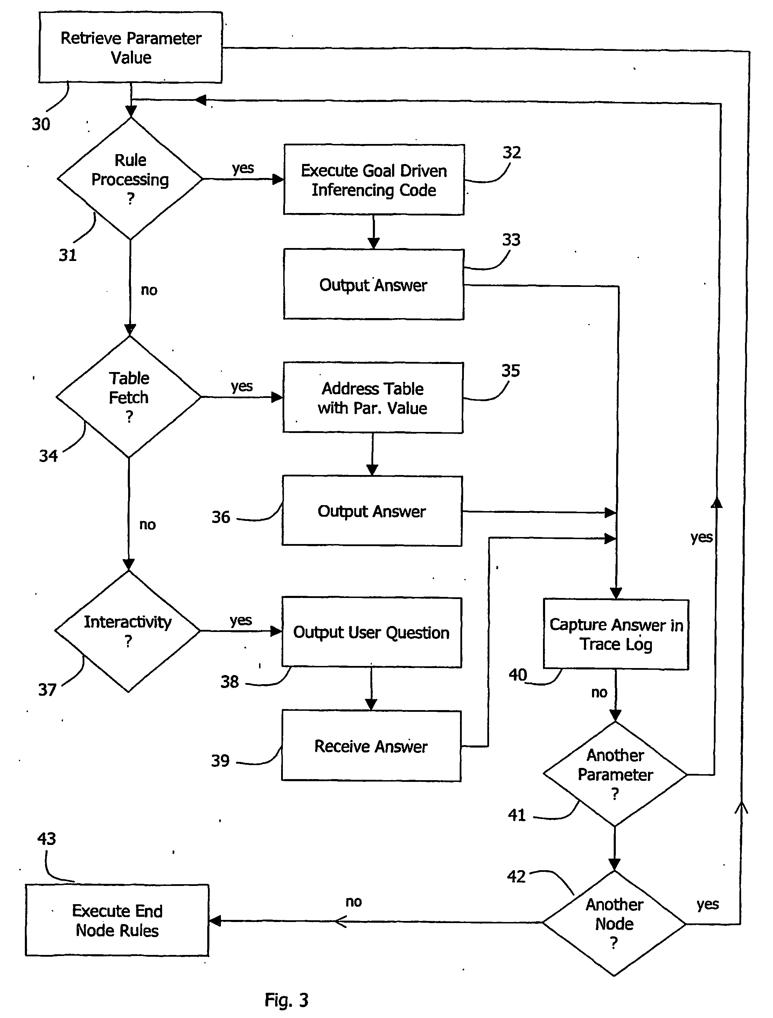

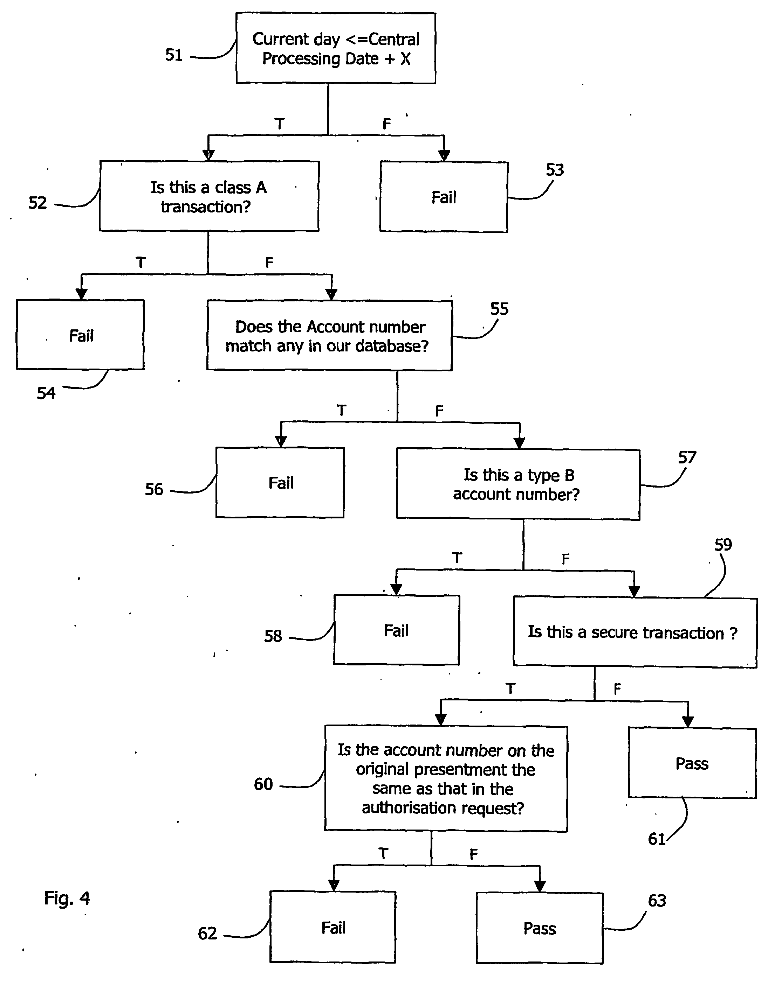

Where decision tree processing is required, a particular decision tree associated with the selected RA is executed in step 19. This is described in detail below with reference to Figs. 3 and 4.

The output of the decision tree processing step 19 is an instruction for activating a module to implement a prescribed action such as an interfacing action IC1, IC2; IC3, or IC4 described above. As for the alternative branch through steps 15 and 16, the case may be closed or it may loop back to step 13.

As shown by the step 21, the changes in the prescribed requirements are dynamically incorporated by updating the relevant decision trees. This involves the following steps.
1) analysis of a new rule set
2) determination of the impact of the changes contained in the new rule set on the multiplicity of existing decision trees
3) amendment of existing decision trees and generation of new decision trees as appropriate application of relevant changes to System 1.

A step 22 involves updating prescribed actions by changing a relevant dispute resolution module. This is prompted by a change in the workflow governed by business rules or policies.

Referring to Figs. 3 and 4, step 19 is described in more detail. In step 30 a parameter value for the first (and top) node of the tree is retrieved. The system processor then proceeds to use one of three mechanisms for obtaining an answer, and the required mechanism is indicated in the parameter value. The fist method is rule processing as indicated by the decision step 31. This involves executing goal-driven inferencing code in step 32 to generate an answer which is outputted in step 33. The second mechanism, as indicated by the decision step 34, is to address a database table in step 35 with an address included in the parameter value. This results in output of an answer in step 36. The third mechanism, as indicated by the decision step 37, is to interactively communicate with an authorised user by outputting a question in step 38 and receiving an answer in step 39.

After an answer has been obtained, the processor in step 40 captures an answer for that parameter in the trace log. It then loops back in step 41 for each additional parameter associated with the particular node of the decision tree. There may be up to three parameters for each node, one associated with each mechanism. The answer may, for example, be to proceed with a chargeback process if the current time is within the allowed time limit.

The following is an example of a trace log:-

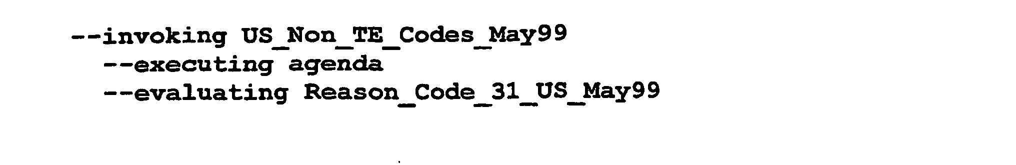

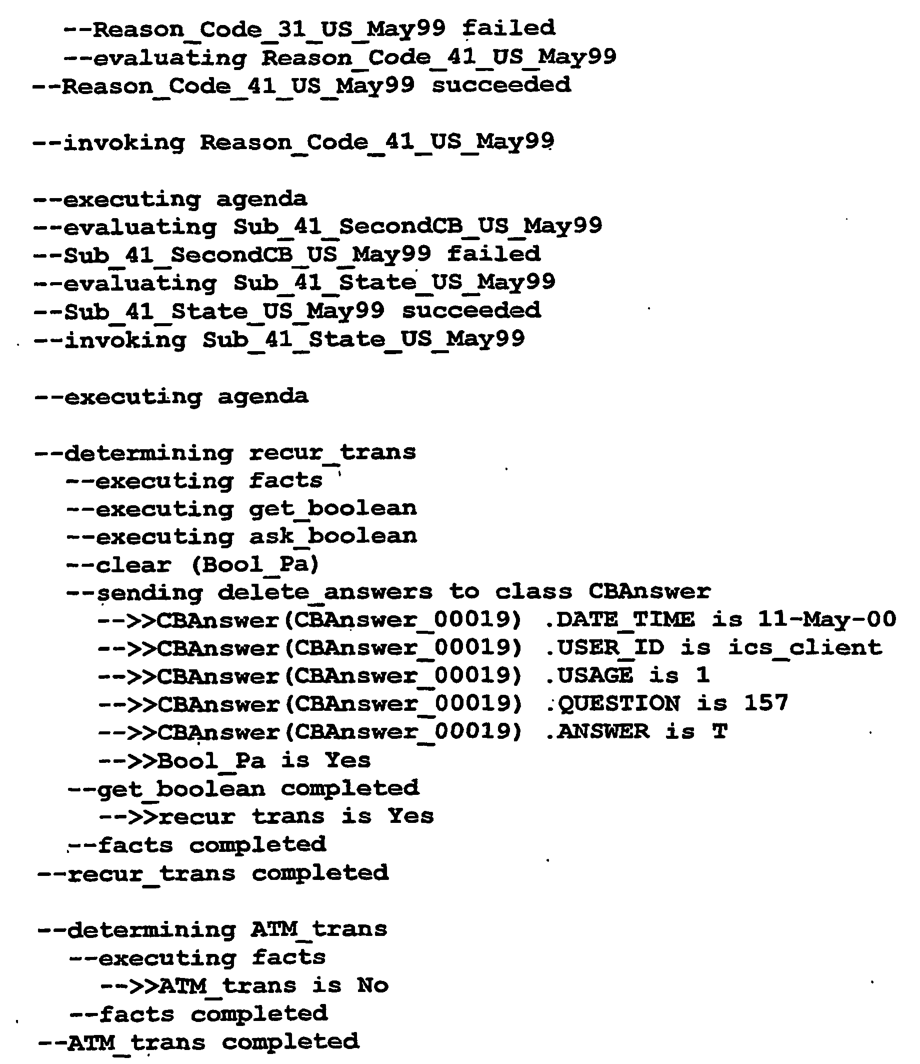

As indicated by the decision step 42, steps 30 to 41 are repeated for each additional node of the decision tree. When all nodes in a route to an end node have been processed, a set of rules associated with the end node are executed in step 43 using the trace log. These rules generate a positive or negative output together with text indicating the reasoning behind the output and other key transaction information.

Referring in particular to Fig. 4, a decision tree 50 is shown. A top node 51 has a parameter calling a rule concerning the current day, as illustrated. A fail answer outputted in step 33 brings the processing to an end node 53. The trace log in this case provides the data for a text statement indicating the reasoning behind the negative output. A True output of the rule brings the processor to a node 52 in which a parameter value indicates a database table fetch 35 to determine the class of transaction. A class A value causes termination of step 19 with an end node 54. A different class brings processing to a node 55, which has parameter values causing a fetch 35 and subsequently an interactive step 38 if the fetch fails. An end node 56 is executed if the account number does not match. Alternatively, a node 57 is executed in a manner similar to node 55 (involving both a fetch 35 and possibly also interactivity 38). The next node is either an end node 58 or node 59 having a parameter indicating rule processing 32 to provide an output leading to either an end node 61 or a node 60 involving a fetch 35 and interactivity 38 if the fetch fails. The next nodes 62 and 63 are both end nodes.

It will be appreciated that the invention provides for very highly automated processing of transaction disputes in a manner which minimises user inputs required. The recommended action rules processing means ensures that a recommended action is selected, even without complete matching of test conditions by selection of the last action from the appropriate list. In most instances, there will be no need to select the last (default) recommended action as an earlier action may be chosen according to probabilities for matching of conditions. The recommended action can select operation of a decision tree execution means which generates an instruction for a dispute resolution action module in a very effective manner. There is comprehensive gathering of the answers which are required using one or more of a number of techniques to ensure optimum versatility. These answers form a comprehensive input for rule processing at an end node to help ensure that the correct action module instruction is generated. Also, the use of the decision tree and of action modules for the prescribed rules and actions respectively allow the system to be updated in a dynamic and simple manner to reflect changes in these rules and actions. The rule processing means for steps 15, 16, and 20 allow an alternative to RA processing where this is appropriate. A further major advantage is the extent of integration with other systems, as set out with reference to Fig. 1.

The invention is not limited to the embodiments described but may be varied in construction and detail within the scope of the claims.

## Claims

1. A transaction dispute management system (1) comprising:
an interface (2) for receiving (12) dispute data from a transaction processing system;
a recommended action rule processing means for applying (13) rules to said dispute data to determine a recommended action according to satisfying test conditions;
a decision tree execution means for automatically executing (19) a decision tree indicated by the recommended action, and wherein:
the decision tree execution means comprises means for determining (30) one or more parameter values associated with each successive node of the decision tree, and wherein there are at least two parameters associated with some nodes,
each said parameter value (31, 34, 37) indicates a mechanism (32, 35, 38) for obtaining an answer, said mechanisms including retrieval (34) from a database, interactive input (38) from a user, and execution of rules (32),
the execution means uses a mechanism indicated by each parameter value to capture (40) an answer for each parameter value in a trace log,
for each node for which there are a plurality of parameter values the execution means uses (41) the mechanism indicated with every parameter value, and
said trace log provides an input to a rule set (43) associated with an end node to determine the decision tree output; and
a plurality of dispute resolution action modules each for performing a dispute resolution action (20) in response to an input instruction provided by the decision tree execution means as part of the decision tree output, and for generating an output indicating the action performed.

2. A transaction dispute management system as claimed in claim 1, wherein a parameter value (34) includes a database table address (35) for a table fetch to retrieve an answer (36).

3. A transaction dispute management system as claimed in claims 1 or 2, wherein a parameter value (37) includes an address for a database table of user questions to prompt (38) input of an answer (39).

4. A transaction dispute management system as claimed in any preceding claim, wherein the rules (32) for determining an answer are goal-driven inferencing rules.

5. A transaction dispute management system as claimed in any preceding claim, wherein the recommended action rule processing means (13) comprises means for testing compliance with possible recommended actions of a list selected from a plurality of lists.

6. A transaction dispute management system as claimed in claim 5, wherein the recommended action rule processing means (13) comprises means for ceasing testing when a possible recommended action tests positive.

7. A transaction dispute management system as claimed in claim 6, wherein the tests involve matching conditions associated with the recommended action.

8. A transaction dispute management system as claimed in any of claims 5 to 7, wherein the recommended action processing means (13) comprises means for determining a positive test result if a probability value exceeds a threshold.

9. A transaction dispute management system as claimed in any of claims 5 to 8, wherein the recommended action rule processing means (13) comprises means for selecting a final recommended action in the list if processing reaches that recommended action.

10. A transaction dispute management system as claimed in any preceding claim, wherein the system comprises a rule processing means (15) for processing a recommended action without use of a decision tree.

11. A transaction dispute management system as claimed in claim 10, wherein said rule processing means (15) comprises means (16) for performing actions leading to closure of a dispute.

12. A transaction dispute management system as claimed in any preceding claim, wherein the system further comprises means for dynamically updating (21) decision trees to reflect changes in prescribed dispute handling requirements.

13. A transaction dispute management method (11) implemented by a transaction dispute management system, the method comprising the steps of:
an interface (2) receiving (12) dispute data from a transaction processing system;
a rule processor applying (13) rules to said dispute data to determine a recommended action according to satisfying test conditions;
a decision tree execution means automatically executing (19) a decision tree indicated by the recommended action, wherein:
the decision tree execution means determines (30) one or more parameter values associated with each successive node of the decision tree, and wherein there are at least two parameters associated with some nodes,
each said parameter value (31, 34, 37) indicates a mechanism (32, 35, 38) for obtaining an answer, said mechanisms including retrieval (35) from a database, interactive input (38) from a user, and execution of rules (32),
the decision tree execution means uses a mechanism indicated by each parameter value to capture (40) an answer for each parameter value in a trace log,
for each node for which there are a plurality of parameter values the decision tree execution means uses (41) the mechanism indicated with every parameter value, and
said trace log provides an input to a rule set (43) associated with an end node to determine a decision tree output; and
a dispute resolution action module performing a dispute resolution action (20) in response to an input instruction provided by the decision tree execution means as part of the decision tree output, and generating an output indicating the action performed.

14. A computer program product comprising software code portions for performing each of the steps of the transaction dispute management method claimed in claim 13 when loaded on a digital computer.

## Patentansprüche

1. Transaktionsdisput-Managementsystem (1), das Folgendes umfasst:
eine Schnittstelle (2) zum Empfangen (12) von Disputdaten von einem Transaktionsverarbeitungssystem;
ein Empfohlene-Aktion-Regelverarbeitungsmittel zum Anwenden (13) von Regeln auf die genannten Disputdaten, um eine empfohlene Aktion im Einklang mit der Erfüllung von Testbedingungen zu ermitteln;
ein Entscheidungsbaum-Abarbeitungsmittel zum automatischen Abarbeiten (19) eines Entscheidungsbaums, der durch die empfohlene Aktion angezeigt wird, und wobei:
das Entscheidungsbaum-Abarbeitungsmittel Mittel zum Ermitteln (30) von einem oder mehreren Parameterwerten in Verbindung mit jedem aufeinander folgenden Knoten des Entscheidungsbaums umfasst und wobei mit einigen Knoten wenigstens zwei Parameter assoziiert sind,
jeder genannte Parameterwert (31, 34, 37) einen Mechanismus (32, 35, 38) zum Einholen einer Antwort anzeigt, wobei die genannten Mechanismen den Abruf (34) aus einer Datenbank, interaktives Eingeben (38) von einem Benutzer und die Ausführung von Regeln (32) beinhalten,
das Abarbeitungsmittel einen Mechanismus benutzt, der durch jeden Parameterwert angedeutet wird, um eine Antwort für jeden Parameterwert in einem Ablaufprotokoll zu erfassen (40),
für jeden Knoten, für den es eine Mehrzahl von Parameterwerten gibt, das Abarbeitungsmittel den Mechanismus verwendet (41), der mit jedem Parameterwert angezeigt wird, und
das genannte Ablaufprotokoll eine Eingabe in einen Regelsatz (43) erzeugt, der mit einem Endknoten assoziiert ist, um den Entscheidungsbaumausgang zu ermitteln; und
eine Mehrzahl von Disputlösungsaktionsmodulen jeweils zum Durchführen einer Disputlösungsaktion (20) als Reaktion auf eine eingegebene Anweisung, die von dem Entscheidungsbaum-Abarbeitungsmittel als Teil des Entscheidungsbaumausgangs bereitgestellt wird, und zum Erzeugen einer Ausgabe, die die durchgeführte Aktion anzeigt.

2. Transaktionsdisput-Managementsystem nach Anspruch 1, wobei ein Parameterwert (34) eine Datenbanktabellenadresse (35) für einen Tabellenabruf zum Einholen einer Antwort (36) beinhaltet.

3. Transaktionsdisput-Managementsystem nach Anspruch 1 oder 2, wobei ein Parameterwert (37) eine Adresse für eine Datenbanktabelle von Benutzerfragen auf eine Aufforderung (38) zur Eingabe einer Antwort (39) beinhaltet.

4. Transaktionsdisput-Managementsystem nach einem der vorherigen Ansprüche, wobei die Regeln (32) zum Ermitteln einer Antwort zielgerichtete Schlussfolgerungsregeln sind.

5. Transaktionsdisput-Managementsystem nach einem der vorherigen Ansprüche, wobei das Empfohlene-Aktion-Regelverarbeitungsmittel (13) Mittel zum Testen der Erfüllung mit möglichen empfohlenen Aktionen aus einer Liste umfasst, die aus einer Mehrzahl von Listen ausgewählt wurde.

6. Transaktionsdisput-Managementsystem nach Anspruch 5, wobei das Empfohlene-Aktion-Regelverarbeitungsmittel (13) Mittel zum Stoppen des Testens umfasst, wenn das Testergebnis einer möglichen empfohlenen Aktion positiv ist.

7. Transaktionsdisput-Managementsystem nach Anspruch 6, wobei die Tests passende Bedingungen involvieren, die mit der empfohlenen Aktion assoziiert sind.

8. Transaktionsdisput-Managementsystem nach einem der Ansprüche 5 bis 7, wobei das Empfohlene-Aktion-Verarbeitungsmittel (13) Mittel zum Ermitteln eines positiven Testergebnisses umfasst, wenn ein Wahrscheinlichkeitswert einen Schwellenwert überschreitet.

9. Transaktionsdisput-Managementsystem nach einem der Ansprüche 5 bis 8, wobei das Empfohlene-Aktion-Regelverarbeitungsmittel (13) Mittel zum Wählen einer endgültigen empfohlenen Aktion in der Liste umfasst, wenn die Verarbeitung diese empfohlene Aktion erreicht.

10. Transaktionsdisput-Managementsystem nach einem der vorherigen Ansprüche, wobei das System ein Regelverarbeitungsmittel (15) zum Verarbeiten einer empfohlenen Aktion ohne Verwendung eines Entscheidungsbaums umfasst.

11. Transaktionsdisput-Managementsystem nach Anspruch 10, wobei das genannte Regelverarbeitungsmittel (15) Mittel (16) zum Durchführen von Aktionen umfasst, die zum Abschluss eines Disputs führen.

12. Transaktionsdisput-Managementsystem nach einem der vorherigen Ansprüche, wobei das System ferner Mittel zum dynamischen Aktualisieren (21) von Entscheidungsbäumen umfasst, um Änderungen an vorgeschriebenen Disputhandhabungsanforderungen zu reflektieren.

13. Transaktionsdisput-Managementverfahren (11), das von einem Transaktionsdisput-Managementsystem implementiert wird, wobei das Verfahren die folgenden Schritte umfasst:
Empfangen (12) von Disputdaten von einem Transaktionsverarbeitungssystem durch eine Schnittstelle (2);
Anwenden (13) von Regeln auf die genannten Disputdaten, um eine empfohlene Aktion im Einklang mit der Erfüllung von Testbedingungen zu ermitteln, durch einen Regelprozessor;
automatisches Abarbeiten (19) eines durch die empfohlene Aktion angezeigten Entscheidungsbaums durch ein Entscheidungsbaum-Abarbeitungsmittel, wobei:
das Entscheidungsbaum-Abarbeitungsmittel einen oder mehrere Parameterwerte in Verbindung mit jedem aufeinander folgenden Knoten des Entscheidungsbaums ermittelt (30) und wobei mit einigen Knoten wenigstens zwei Parameter assoziiert sind,
jeder genannte Parameterwert (31, 34, 37) einen Mechanismus (32, 35, 38) zum Einholen einer Antwort anzeigt, wobei die genannten Mechanismen den Abruf (34) aus einer Datenbank, interaktives Eingeben (38) von einem Benutzer und die Ausführung von Regeln (32) beinhalten,
das Entscheidungsbaum-Abarbeitungsmittel einen Mechanismus benutzt, der durch jeden Parameterwert angedeutet wird, um eine Antwort für jeden Parameterwert in einem Ablaufprotokoll zu erfassen (40),
für jeden Knoten, für den es eine Mehrzahl von Parameterwerten gibt, das Entscheidungsbaum-Abarbeitungsmittel den Mechanismus verwendet (41), der mit jedem Parameterwert angezeigt wird, und
das genannte Ablaufprotokoll eine Eingabe in einen Regelsatz (43) erzeugt, der mit einem Endknoten assoziiert ist, um einen Entscheidungsbaumausgang zu ermitteln; und
Durchführen einer Disputlösungsaktion (20) durch ein Disputlösungsaktionsmodul als Reaktion auf eine eingegebene Anweisung, die von dem Entscheidungsbaum-Abarbeitungsmittel als Teil des Entscheidungsbaumausgangs bereitgestellt wird, und Erzeugen einer Ausgabe, die die durchgeführte Aktion anzeigt.

14. Computerprogrammprodukt, das Softwarecode-Teile zum Ausführen jedes der Schritte des Transaktionsdisput-Managementverfahrens nach Anspruch 13 umfasst, wenn es auf einem digitalen Computer geladen ist.

## Revendications

1. Un système de gestion de conflits de transaction (1) comprenant :
une interface (2) pour recevoir (12) des données de conflits d'un système de traitement de transactions ;
un moyen de traitement d'une règle d'opération recommandée pour appliquer (13) des règles auxdites données de conflits afin de déterminer une opération recommandée en fonction de conditions de test admissibles ;
un moyen d'exécution d'un arbre de décision pour exécuter automatiquement (19) un arbre de décision indiqué par l'opération recommandée, et où :
le moyen d'exécution d'un arbre de décision comprend un moyen de déterminer (30) une ou plusieurs valeurs de paramètre associées à chaque noeud successif de l'arbre de décision, et où il y a au moins deux paramètres associés à certains noeuds,
chacune desdites valeurs de paramètre (31, 34, 37) indique un mécanisme (32, 35, 38) pour obtenir une réponse, lesdits mécanismes incluant une opération de récupération (34) à partir d'une base de données, une saisie interactive (38) par un utilisateur et l'exécution de règles (32),
le moyen d'exécution utilise un mécanisme indiqué par chaque valeur de paramètre pour capturer (40) une réponse pour chaque valeur de paramètre dans un fichier journal trace,
pour chaque noeud pour lequel il existe une pluralité de valeurs de paramètre le moyen d'exécution utilise (41) le mécanisme indiqué avec toutes les valeurs de paramètre, et
ledit fichier journal trace fournit une entrée vers un jeu de règles (43) associé à un noeud d'extrémité pour déterminer la sortie de l'arbre de décision ; et
une pluralité de modules d'opération de résolution de conflit, chacun d'eux étant destiné à exécuter une opération de résolution de conflit (20) en réponse à une instruction d'entrée fournie par le moyen d'exécution de l'arbre de décision dans le cadre de la sortie de l'arbre de décision, et à générer une sortie indiquant l'opération exécutée.

2. Un système de gestion de conflits de transaction selon la Revendication 1, où une valeur de paramètre (34) inclut une adresse de table de base de données (35) pour une extraction de table afin de récupérer une réponse (36).

3. Un système de gestion de conflits de transaction selon la Revendication 1 ou 2, où une valeur de paramètre (37) inclut une adresse d'une table de base de données de questions d'utilisateur pour solliciter (38) la saisie d'une réponse (39).

4. Un système de gestion de conflits de transaction selon l'une quelconque des Revendications précédentes, où les règles (32) pour déterminer une réponse sont des règles d'inférence guidées par les buts.

5. Un système de gestion de conflits de transaction selon l'une quelconque des Revendications précédentes, où le moyen de traitement d'une règle d'opération recommandée (13) comprend un moyen de tester la conformité avec des opérations recommandées possibles d'une liste sélectionnée parmi une pluralité de listes.

6. Un système de gestion de conflits de transaction selon la Revendication 5, où le moyen de traitement d'une règle d'opération recommandée (13) comprend un moyen de suspendre les tests lorsqu'une opération recommandée possible est déclarée positive par le test.

7. Un système de gestion de conflits de transaction selon la Revendication 6, où les tests comprennent la mise en correspondance de conditions associées à l'opération recommandée.

8. Un système de gestion de conflits de transaction selon l'une quelconque des Revendications 5 à 7, où le moyen de traitement d'opération recommandée (13) comprend un moyen de déterminer un résultat de test positif si une valeur de probabilité dépasse un seuil donné.

9. Un système de gestion de conflits de transaction selon l'une quelconque des Revendications 5 à 8, où le moyen de traitement d'une règle d'opération recommandée (13) comprend un moyen de sélectionner une opération recommandée finale dans la liste si le traitement atteint cette opération recommandée.

10. Un système de gestion de conflits de transaction selon l'une quelconque des Revendications précédentes, où le système comprend un moyen de traitement de règle (15) pour le traitement d'une opération recommandée sans recours à un arbre de décision.

11. Un système de gestion de conflits de transaction selon la Revendication 10, où ledit moyen de traitement de règle (15) comprend un moyen (16) d'exécuter des opérations conduisant à la résolution d'un conflit.

12. Un système de gestion de conflits de transaction selon l'une quelconque des Revendications précédentes, où le système comprend en outre un moyen d'actualiser dynamiquement (21) des arbres de décision pour prendre en compte des modifications apportées aux conditions prescrites de gestion des conflits.

13. Un procédé de gestion de conflits de transaction (11) mis en oeuvre par un système de gestion de conflits de transaction, le procédé comprenant les opérations suivantes :
une interface (2) recevant (12) des données de conflits d'un système de traitement de transactions ;
un processeur de règles appliquant (13) des règles auxdites données de conflits pour déterminer une opération recommandée en fonction de conditions de test admissibles ;
un moyen d'exécution d'un arbre de décision exécutant automatiquement (19) un arbre de décision indiqué par l'opération recommandée, où :
le moyen d'exécution d'un arbre de décision détermine (30) une ou plusieurs valeurs de paramètre associées à chaque noeud successif de l'arbre de décision, et où il y a au moins deux paramètres associés à certains noeuds,
chacune desdites valeurs de paramètre (31, 34, 37) indique un mécanisme (32, 35, 38) pour obtenir une réponse, lesdits mécanismes incluant une opération de récupération (35) à partir d'une base de données, une saisie interactive (38) par un utilisateur et l'exécution de règles (32),
le moyen d'exécution d'un arbre de décision utilise un mécanisme indiqué par chaque valeur de paramètre pour capturer (40) une réponse pour chaque valeur de paramètre dans un fichier journal trace,
pour chaque noeud pour lequel il existe une pluralité de valeurs de paramètre le moyen d'exécution d'un arbre de décision utilise (41) le mécanisme indiqué avec toutes les valeurs de paramètre, et
ledit fichier journal trace fournit une entrée vers un jeu de règles (43)
associé à un noeud d'extrémité pour déterminer une sortie d'arbre de décision ; et
un module d'opération de résolution de conflit exécutant une opération de résolution de conflit (20) en réponse à une instruction d'entrée fournie par le moyen d'exécution d'un arbre de décision dans le cadre de la sortie de l'arbre de décision et générant une sortie indiquant l'opération exécutée.

14. Un programme informatique comprenant des portions de code logiciel pour exécuter chacune des opérations du procédé de gestion de conflits de transaction selon la Revendication 13 lorsqu'il est chargé sur un calculateur numérique.
